Europäisches Patentamt

European Patent Office

Office européen des brevets

(11) Veröffentlichungsnummer: **0 108 370**
**B1**

# (12) EUROPÄISCHE PATENTSCHRIFT

(45) Veröffentlichungstag der Patentschrift:
24.09.86

(21) Anmeldenummer: **83110875.8**

(22) Anmeldetag: **31.10.83**

(51) Int. Cl.⁴: **G 06 F 15/46**

(54) Elektronisches Fernwirkgerät.

(30) Priorität: **02.11.82 DE 3240447**
**24.10.83 DE 3338600**

(43) Veröffentlichungstag der Anmeldung:
**16.05.84 Patentblatt 84/20**

(45) Bekanntmachung des Hinweises auf die Patenterteilung:
**24.09.86 Patentblatt 86/39**

(84) Benannte Vertragsstaaten:
**AT BE CH DE FR GB IT LI NL SE**

(56) Entgegenhaltungen:
**EP-A-0 060 339**
**DE-A-2 634 027**

**ASEA JOURNAL; Band 49, Nr. 5, 1976, Seiten 111-114, Vasteras, SE., C.G. LUNDQVIST et al.: "Remote terminal units"**
**ELECTRO 80 CONFERENCE RECORD, 13.-15. Mai 1980, Band 5, Seiten 9/3-1 - 9/3-14, New York, USA, J. WAHID: "Microcomputers in measurement and control"**

(73) Patentinhaber: **Siemens Aktiengesellschaft Berlin und München, Wittelsbacherplatz 2, D-8000 München 2 (DE)**

(72) Erfinder: **Neuendorff, Hans, Dipl.- Ing., Bernhard-Beyer- Strasse 3, D-1000 Berlin 39 (DE)**

## Beschreibung

Die Erfindung bezieht sich auf ein elektronisches Fernwirkgerät gemäß dem Oberbegriff des Anspruchs 1.

Bei einem bekannten Fernwirkgerät dieser Art (DE-A-31 10 576) ist der dem zu bearbeitenden Prozeß zugeordnete Mikrocomputer für eine Datenverarbeitung zwischen die Speicheranordnung und die Peripheriebausteine (Ein-/Ausgabebausteine oder Prozeßrechner) geschaltet. Die Bearbeitung der anfallenden Daten (Fernwirktelegramm, Ein-/Ausgabedaten) gaschieht hier derart, daß die Übertragung dieser Daten in beiden Richtungen zwischen Übertragungsweg und Prozeß optimal hinsichtlich Zeitaufwand und Übertragungssicherheit gewährleistet ist. An eine selbständige Bearbeitung von Meßdaten zur Realisierung von Regelfunktionen am Ort der Prozeßbearbeitung ist hier nicht gedacht.

Bei einem weiteren bekannten Fernwirkgerat (Siemens-Druckschrift SINAUT 8-FW, Bestell-Nr. E-142/1703 "Ein rechnergeführtes Fernwirksystem", Seiten 6 - 9) ist eine Rechenschaltung vorhanden, die direkt vom Prozeß erfaßte Meßdaten zum Übertragungskanal nach vorgegebenem Programm übermittelt. Es wird hierbei bei allen anfallenden Meßdaten mit relativ großem Programmaufwand geprüft, ob eine Übermittlung dieser Meßdaten an den Übertragungskanal stattfinden soll. Eine Anpassung an unterschiedliche Anlagen, bei denen somit auch unterschiedliche Prozeßabläufe mit veränderten Parametern stattfinden, ist nur mit großem Aufwand möglich, da aufgrund des vorgegebenen Ablaufs der Steuer- und Überwachungsfunktionen eine umfangreiche Umorganisation der Rechenschaltung bzw. des Fernwirkgeräts nötig ist.

Der Erfindung liegt die Aufgabe zugrunde, ein Fernwirkgerät zur Prozeßautomatisierung zu schaffen, mit dem eine selbständige Bearbeitung von Meßdaten und eine Anpassung an unterschiedliche Prozeßparameter am Ort der Prozeßbearbeitung ohne großen Aufwand durchführbar und eine geeignete Zusammenstellung der Fernwirktelegramme zur Fernübartragung gewährleistet ist.

Zur Lösung dieser Aufgabe sind bei einem Fernwirkgerät der eingangs genannten Art die Merkmale das Kennzeichens des Anspruchs 1 vorhanden.

Ein vorteilhafter Betrieb das Fernwirkgeräts ist gewährleistet, wenn die erste Mikrocomputeranordnung ein Bestandteil oder selbst ein für sich bekanntes programmierbares Automatisierungsgerät ist, das unter anderem eine Zentraleinheit und einen Treiberbaustein aufweist, wobei dar Treibarbaustein über ein externes Programmiergerät so organisierbar ist, daß mit ihm die Prozeßbearbeitung und Telegrammzusammenstellung beeinflußbar ist. Ein solches Automatisierungsgerät ist beispielsweise aus der Siemens-Druckschrift SIMATIC S5, Bestell-Nr. E-324/1727 "Speicherprogrammierbare Automatisierungsgeräte S5-130 A und S5-130 K", Seite 17 bekannt. An dieses bekannte Automatisierungsgerät lassen sich auf einfache Weise eine große Anzahl von Signalformern (Ein-/Ausgabebausteinen) anschließen, mit denen eine selbständige Prozeßbearbeitung durchgeführt werden kann. Über eine Busleitung wird dieses Automatisierungsgerät mit der Speicheranordnung und somit mit dem Fernwirkteil das Fernwirkgerätes verbunden. Hierbei werden die Prozaßbearbeitungen, d. h. die Steuer- und Überwachungsaufgaben, in herkömmlicher Weise mit dem Automatisierungsgerät am Ort durchgeführt, während die Übergebe der Meßdaten an den Übertragungskanal (Überwachungsrichtung) bzw. die Entnahme der Steuerbefehle vom Übertragungskanal (Steuerrichtung) mittels der zweiten Mikrocomputeranordnung im Fernwirkteil durchgeführt wird. Bei einer Änderung der prozeßspezifischen Parameter einer Anlage braucht hier nur eine Änderung am Ort, d. h. im Treiberbaustein des Automatisierungsgerätes, vorgenommen werden, die beispielsweise über ein extern anschließbares Programmiergerät durchführbar ist.

Es ist weiterhin auch noch aus "Electro 80 Conference Record", 13. - 15. Mai 1980, Band 5, New York (US), Wahid: "Microcomputers in measurement and control", Seiten 9/3-1 - 9/3-14 für sich bekannt, Mikrocomputer für eine selbständige Prozeßdatenverarbeitung am Ort des Prozesses vorzusehen. Dieser Mikrocomputer weist eine Schnittstelle für Bedienfunktion auf, die auch in Form einer seriellen Schnittstelle für Kommunikationsverbindungen mit einem zentralen Computer aufgebaut sein kann. Bei dieser Verbindung von Zentralcomputer und Mikrocomputer am Ort der Prozeßbearbeitung handelt es sich jedoch um eine Fernwirkverbindung, die eine Übermittlung von vorher weitgehend festgelegten Fernwirktelegrammen beinhaltet. Die spezifischen Funktionen von solchen Fernwirkverbindungen müssen ein sichereres Zusammenarbeiten von mehreren Fernwirkgeräten untereinander, gegebenenfalls über eine Zentrale, und vor allen Dingen auch eine selbständige initiierte Übertragung von Meßdaten von den Ein-/Ausgabebausteinen, d. h. in Überwachungsrichtung, gewährleisten. Da somit die Zussmmenstellung (Wortbildung), Adressierung und zeitliche Staffelung der Fernwirktelegramme in vorgegebenen Parametern durchzuführen ist, kann hier auf ein besonderes Fernwirkteil mit separatem Mikrocomputer zur Ankoppelung an den Übertragungsweg nicht verzichtet werden.

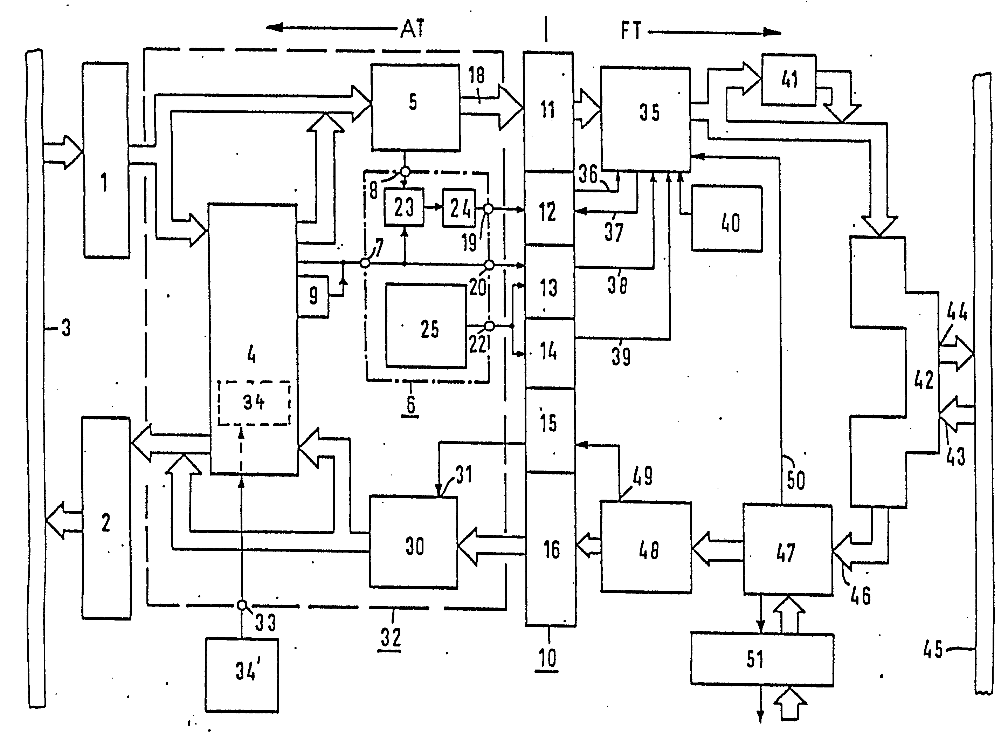

Die Erfindung wird anhand der Figur dargestellt, die ein Prinzipschaltbild eines Ausführungsbeispiels eines Fernwirkgerätes zeigt.

In der linken Hälfte der Figur ist das Automatisierungsteil AT mit einer ersten Mikrocomputeranordnung und in der rechten Hälfte das Fernwirkteil FT des Fernwirkgerätes mit einer zweiten Mikrocomputeranordnung dargestellt. Beim Automatisierungsteil AT sind Signelformer 1 und 2 vorhanden, die - eventuell über hier nicht dargestellte weitere Meßumformer - mit einem sinnbildlich dargestellten Prozeß 3 verbunden sind. Der Prozeß 3 enthält hier eine Anzahl bestimmter zu steuernder bzw. zu überwachender Funktionen, beispielsweise einer Energieversorgungsanlage. Der oder die Signalformer 1 sind in Überwachungsrichtung geschaltet und über Datenleitungen mit einer Rechenschaltung 4 und einem Datenvorverarbeitungsbaustein 5 verbunden, wobei außerdem auch die Rechenschaltung 4 über eine Datenleitung mit dem Baustein 5 verbunden ist. Eine Zugriffssteuerung 6 ist an ihrem ersten Eingang 7 mit der Rechenschaltung 4 und über einen zweiten Eingang 8 mit dem Datenvorverarbeitungsbaustein 5 verbunden. An den Eingang 7 ist derüber hinaus auch ein Ausgang eines Timer-Zusatzes 9 angeschlossen, der direkt an die Rechenschaltung 4 angekoppelt ist.

Beim dargestellten Ausführungsbeispiel ist ferner eine aus Schreib-/Lesespeichern mit einer Anzahl Datenregistern gebildete Speicheranordnung 10 vorhanden, die einen Eingabebereich 11, einen Anreizbereich 12, einen Prioritätsbereich 13, einen Kettungsbereich 14, einen weiteren Anreizbereich 15 und einen Ausgabebereich 16 enthält. Der Bereich 11 wird über eine Datenleitung 18 mit den Ausgangsdaten des Bausteins 5 geladen, der Bereich 12 ist mit einem ersten Ausgang 19 der Zugriffssteuerung 6 und der Bereich 13 mit einem zweiten Ausgang 20 und einem dritten Ausgang 22 der Zugriffssteuerung 6 verbunden. Der dritte Ausgang 22 ist außerdem mit dem Bereich 14 der Speicheranordnung 10 verbunden. Die Zugriffssteuerung 6 enthält einen Baustein 23 zur Bildung von Anreizbits und einen Zugriffsbaustein 24. Der Anreizbaustein 23 ist mit den Signalen der Eingänge 7 und 8 beaufschlagt, der Ausgang des Anreizbausteins 23 ist über den Zugriffsbaustein 24 auf den Ausgang 19 geführt. Innerhalb der Zugriffssteuerung 6 besteht weiterhin eine direkte Verbindung vom ersten Eingang 7 zum zweiten Ausgang 20. Die Steuersignale am dritten Ausgang 22 der Zugriffssteuerung 6 werden von einem Anlaufprogrammbaustein 25 erzeugt, der außerdem mit dem Kettungsbereich 14 der Speicheranordnung 10 verbunden ist.

In Steuerrichtung, d. h. vom Fernwirkteil FT zum Prozeß 3, ist der Ausgabebereich 16 der Speicheranordnung 10 mit einem Verknüpfungsbaustein 30 verbunden, der über einen Anreizeingang 31 an den Anreizbereich 15 der Speicheranordnung 10 angeschaltet ist. Der Ausgang des Verknüpfungsbausteins 30 ist über eine Datenleitung einerseits direkt und andererseits über die Rechenschaltung 4 mit dem oder den Signalformern 2 verbunden. Die strichliert umrandeten Teile 32 des Automatisierungsteils AT können beispielsweise durch ein bekanntes Automatisierungsgerät gebildet sein, das zusätzlich einen Treiberbaustein 34 zur Festlegung der Regelfunktionen und der Fernwirktelegramme am Ort der Prozeßbearbeitung aufweist und über einen Eingang 33 von einem externen Programmiergerät 34' programmiert werden kann.

Der Eingabebereich 11 der Speicheranordnung 10 ist auf der Seite des Fernwirkteils FT an einen Satzbildungsbaustein 35 angeschlossen, der über eine Anreizleitung 36 und eine Anreizquittungsleitung 37 mit dem Anreizbereich 12 der Speicheranordnung verbunden ist. Über Steuerleitungen 38 bzw. 39 ist der Satzbildungsbaustein 35 darüber hinaus mit dem Prioritätsbereich 13 und dem Kettungsbereich 14 der Speicheranordnung 10 verbunden. Weiterhin ist ein weiterer Timer-Baustein 40 an den Satzbildungsbaustein 35 angeschlossen. Der Datenausgang des Satzbildungsbausteins 35 ist einerseits direkt und andererseits über einen Prioritäts-Puffer 41 mit einem Sende-/Empfangsbaustein 42 verbunden. Über einen Eingang 43 und einen Ausgang 44 ist der Sende-/Empfangsbaustein 42 mit einem Übertragungskanal 45 verbunden. Die vom Sende-/Empfangsbeustein 42 abgegebenen Daten werden auf einen Eingang 46 eines Empfangsanalysebausteins 47 geleitet, der seine Ausgangsdaten über einen Prozeßausgabebaustein 48 auf den Ausgabebereich 16 der Speicheranordnung 10 abgibt. Über einen Ausgang 49 ist der Prozeßausgabebaustein 48 mit dem Anreizbereich 15 der Speicheranordnung 10 verbunden. Über eine Steuerleitung 50 ist auch der Satzbildungsbaustein 35 mit einem Ausgangssignal des Empfangsanalysebausteins 47 beaufschlagt. Über eine Staffelanschaltung 51 kann der Empfangsanalysebaustein 47 und damit auch das gesamte Fernwirkgerät mit weiteren gleich aufgebauten Fernwirkgeräten verbunden werden.

Beim dargestellten Ausführungsbeispiel der Erfindung werden in Überwachungsrichtung mit den Signalformern 1 Meßdaten vom Prozeß 3 ermittelt und anschließend direkt im Datenvorverarbeitungsbaustein 5 vorverarbeitet. Mit dem Baustein 5 kann beispielsweise ein Alt-/Neu-Vergleich der Meßdaten durchgeführt werden, wobei nur dann Meßdaten auf den Ausgang des Bausteins 5 gelangen, wenn sie sich gegenüber vorherigen Meßdaten verändert haben. Ferner können eventuell die Meßdaten von Verzerrungen bereinigt werden. Über den Eingang 8 der Zugriffssteuerung 6 kann die Zuordnung eines bestimmten Zählwertes erfolgen, der im Anreizbereich 12 der Speicheranordnung 10 abgelegt wird. Die vom Signalformer 1 abgegebenen Meßdaten können darüber hinaus in der Rechenschaltung 4 in vorgegebener Weise mit anderen vom Prozeß ermittelten Daten verknüpft werden oder es können beispielsweise auch geglättete Analogwerte von speziellen Meßumformern als Digitalwerte ausgegeben werden. Um dem Fernwirkteil des Fernwirkgerätes mitzuteilen, daß in Überwachungsrichtung Daten ausgesendet werden sollen, wird beispielsweise pro Byte der Meßdaten ein sogenanntes Anreizbit über die Zugriffssteuerung 6 (Anreizbildungsbaustein 23) gesetzt. Hierdurch erfährt das Fernwirkteil beim Ablauf des Sendezyklus, daß Daten für den Übertragungskanal 45 vorliegen. Diese Anreizbits werden im Anreizbereich 12 wieder zurückgesetzt, wenn das Fernwirkteil in einem vorgegebenen Zyklus elle Sendewünsche erfüllt hat. Die Anreizbits wirken über die Steuerleitungen 36 und 37 (Anreiz und Quittung) auf den Satzbildungsbaustein 35, der die Meßdaten übertragungsgerecht aufarbeitet.

Mit der Zugriffssteuerung 6 ist darüber hinaus die Zuordnung eines Prioritätsrangs zu den Meßdaten möglich, der entweder direkt von der Rechenschaltung 4 über den Eingang 7 und den zweiten Ausgang 20 oder über den Anlaufprogrammbaustein 25 dem Prioritätsbereich 13 vorgegeben wird. Der Ausgang des Prioritätsbereichs 13 ist über eine Leitung 38 ebenfalls mit dem Satzbildungsbeustein 35 verbunden, wobei mit einem entsprechenden Signal der Satzbildungsbaustein 35 veranlaßt wird, entweder den Sendezyklus in vorgegebener Reihenfolge durchzuführen oder aber einzelne Meßdaten vorzuziehen und spontan auszusenden. Bei bestimmten Arten von zu übertragenden Datenwörtern (beispielsweise bei einem Zählwertsatz von 4 Byte) kann über den Kettungsbereich 14 der Speicheranordnung 10 dem Satzbildungsbaustein 35 mitgeteilt werden, daß mehrere einzelne Bytes der Meßdaten zu einem Datensatz zusammenge-faßt werden sollen. Die Prioritätszuordnung und die Verkettung kann somit über den Anlaufprogrammbaustein 25 beim Anlauf des Steuerungsteiles eingegeben werden; die Prioritätsanordnung kann aber auch, abhängig von einem bestimmten Verknüpfungsergebnis, in der Rechenschaltung 4 vorgenommen werden.

Auch in Steuerrichtung, also vom Übertragungskanal 45 zum Koppelbaustein 2, werden alle Steuerbefehle im Ausgabebereich 16 der Speicheranordnung 10 zunächst abgespeichert. Beim Transport der Steuerbefehle wird in vergleichbarer Weise wie in Überwachungsrichtung durch Setzen von Anreizbits ein Durchschalten auf das Automatisierungsteil AT des Fernwirkgerätes veranlaßt. Dadurch, daß alle anfallenden Daten im Fernwirkgerät zunächst in der Speicheranordnung 10 abgelegt werden, zu der sowohl das Automatisierungsteil AT als auch das Fernwirkteil FT des Fernwirkgeräts Zugriff hat, ist eine funktionale Trennung und modularer Aufbau der beiden Teile des Fernwirkgerätes durchführbar. Alle Steuer- und Überwachungseufgaben, die anlagenspezifisch bzw. vom Prozeß vorgegeben sind, können somit im Automatisierungsteil AT, beispielsweise durch eine entsprechende Programmierung der Rechenschaltung 4 mittels des Programmiergeräts 34, engepaßt werden.

Ein geeigneter Anwendungsfall liegt beispielsweise dann vor, wenn eine Regelung einer Prozeßgröße am Ort vorgenommen wird, wobei die Meßdaten über einen Eingabebaustein als Istwert dem ersten Mikrocomputer zugeführt werden und der Sollwert aus einem Fernwirktelegramm über die zweite Mikrocomputeranordnung und die Speicheranordnung erhalten wird. Die Regeldaten, die über einen Ausgabebaustein an den Prozeß abgegeben werden, können hierbei in der ersten Mikrocomputeranordnung über im Treiberbaustein festgelegte Regelalgorithmen ermittelt werden.

## Patentanspruch

Fernwirkgerät mit
- einer ersten Mikrocomputeranordnung, die über Ein-/Ausgabebausteine (1, 2) mit Meß- und Regeldaten eines Prozesses (3) beaufschlagbar ist,
- einer zweiten Mikrocomputeranordnung, die über einen Sende-/Empfangsbaustein (42) mit einem Übertragungskanal (45) zur Erzeugung, Auswertung und seriellen Übergabe von Fernwirktelegrammen verbunden ist und mit
- einer Speicheranordnung (10), über die die beiden Mikrocomputeranordnungen miteinander verbunden sind, wobei
- die Speicheranordnung (10) wenigstens ein Datenregister je Übertragungsrichtung aufweist, dadurch gekennzeichnet, daß
- die erste Mikrocomputeranordnung (Automatisierungsteil) so aufgebaut ist, daß über die Eingabebausteine (1) Meßdaten des Prozesses (3) nach in dieser Mikrocomputeranordnung abgelegten Befehlen ausgewertet werden und entsprechende Regeldaten bzw. Steuerbefehle über die Ausgabebausteine (2) an den Prozeß (3) abgebbar sind,
- die erste Mikrocomputeranordnung (Automatisierungsteil) über mindestens ein Datenregister der Speicheranordnung (10) (RAM) mit der zweiten Mikrocomputeranordnung (Fernwirkteil) derart verbunden ist, daß eine zusätzliche Beeinflussung der Regel- bzw. Meßdaten abhängig von im empfangenen Fernwirktelegramm enthaltenen Daten erfolgt und daß
- an die erste Mikrocomputeranordnung (Automatisierungsteil) ein Treiberbaustein (34) angeschaltet ist, der die Bearbeitung der Meß- und Regeldaten derart steuert, daß aufgrund von im Treiberbaustein (34) abgelegten Befehlen bei Vorliegen definierter Meß- bzw. Regeldaten ein Fernwirktelegramm zusammenstellbar ist.

**Claim**

1. A remote control device comprising
- a first microcomputer arrangement which, via input/output modules (1, 2) can be supplied with measurement-and control data of a process (3),
- a second microcomputer arrangement which is connected via a transmitting/receiving module (42) to a transmission channel (45) for the production, analysis and series transmission of remote control telegrams
    and with
- a storage arrangement (10) via which the two microcomputer arrangements are connected to one another
    where
- the storage arrangement (10) includes at least one data register in respect of each transmission direction
    characterised in that
- the first microcomputer arrangement (automation component) is constructed in such manner that via the input modules (1) measurement data of the process (3) is analysed in accordance with commands stored in this microcomputer arrangement and corresponding control data and control commands can be output via the output modules (2) to the process (3),
- the first microcomputer arrangement (automation component) is connected via at least one data register of the storage arrangement (10) (RAM) to the second microcomputer arrangement (remote control component) in such manner that the control and measurement data is additionally influenced in dependence upon data contained in the received remote control telegram and that
- the first microcomputer arrangement (automation component) is connected to a driver module (34) which controls the processing of the measurement and control data in such manner that a remote control telegram can be assembled on the basis of commands stored in the driver module (34) when determinate measurement and control data are available.

**Revendication**

Appareil à commande à distance, avec
- un premier dispositif à micro-ordinateur qui est susceptible d'être chargé par des données de mesure et de réglage d'un processus, par l'intermédiaire de modules d'entrée/sortie (1, 2).
- un second dispositif à micro-ordinateur qui est relié, par l'intermédiaire d'un module d'émission/réception (42), à un canal de transmission (45) pour produire, évaluer et transmettre sériellement des télégrammes de commande à distance, et avec
- un dispositif à mémoire (10) par l'intermédiaire duquel les dispositifs à micro-ordinateurs sont reliés entre eux,
- le dispositif à mémoire (10) comportant au moins un registre de données par sens de transmission,
    caractérisé par le fait que
- le premier dispositif à micro-ordinateur (partie d'automatisation) est constitué de telle façon que, par l'intermédiaire des modulés d'entrée (1), des données de mesure du processus (3) sont évaluées selon les instructions contenues dans ce dispositif à micro-ordinateur et que les données de réglage et d'instruction correspondantes sont susceptibles d'être fournies au processus (3) par l'intermédiaire des modules de sortie (2).
- le premier dispositif à micro-ordinateur (partie d'automatisation) est relié, par l'intermédiaire d'au moins un registre de données du dispositif à mémoire (10) (RAM) au second dispositif à micro-ordinateur (partie à commande à distance) de telle façon qu'une influence supplémentaire des données de réglage et de mesure a lieu en fonction des données contenues dans le télégrammé à commandé à distance reçu, et que
- au premier dispositif à micro-ordinateur (partie d'automatisation) est relié un module de commande (34) qui commande de telle façon le traitement des données de mesure et de réglage que, sur la base des instructions qui sont contenues dans le module de commande (34), un télégramme de commande à distance est susceptible d'être établi, lors de la présence de données de mesure et de réglage déterminées.